# EUROPEAN PATENT APPLICATION

(11) **EP 0 915 274 A1**
(43) Date of publication of application: **12.05.1999**
(21) Application number: 97119450.1
(22) Date of filing: 06.11.1997
(51) Int. Cl.: F16J 15/22

(54) **High performance packing ring**

(71) Applicant: Stoplik Services (I) Pvt. Ltd, Mumbai 400 071 (IN)
(72) Inventor: Pandey, Raj Kumar, Chembur, Mumbai-400 071 (IN)
(74) Representative: WILHELMS, KILIAN & PARTNER Patentanwälte

(57) **Abstract**

The present invention relates to a low compression high perfomance packing ring comprising a hollow tube made of rubber or fluoro polymer or a combination thereof, enveloped with polytetra Fluoro Ethylene ( PTFE), Graphite Polytetra Fluoro Ethylene (PTFE) or Graphite PTFE reinforced yarn, braided together to obtain the desired round or square core cross section, enveloping the said braided core cross section by further braiding with a plurality of reinforced PTFE or Graphite PTFE yarn resulting in a combination thereof having the desired cross sectional size of the gland packing.

## Description

The present invention relates to an improved compression packing used in gland packings for chemicals, solvent services etc.

The important embodiment of the present invention relates to hollow core high recuperation packing for stem tube, rudder, stabilizer, pumps, mixers and agitators.

The invention resides in a revolutionary concept in compression packings field in controlling the flow of fluids and gases in meeting very stringent fluid leakage restrictions and environments where the castastrophic leakage is contained with minimum gland load of the gland follower.

### BACKGROUND OF THE INVENTION:

The conventional gland packing inside the stuffing box due to continuous deforming and reforming becomes loose and breaks down causing uncontrolled leakage.

The ordinary type of gland packing causes damage to the shaft sleeve due to the constant deforming and reforming and at the same time does not perform effectively resulting in the loss of complete batch and pollution hazards.

For effective sealing in these applications a gland packing should have an excellent rate of recuperation without the danger of braiding becoming loose and breaking down.

Packing materials are widely used to prevent fluid leakage around an operating member in a housing with fluid or gases, such as a rotary shaft or a aliding stem or reciprocating pump shaft. Normally the conventional packing is made of a resilient member and is placed under a static load by being held into position within s stuffing box around an operating member. Theoratically the resilient member operates under minimum gland pressure however, it is observed that mechanical load from packing gland follower densifies packing to affect a seal and frequent tightening results in a worn equipment.

The basic requirements of the gland packing for effective sealing and long life are mouldability, flexibility , softness, and recuperation.

Till now whatever yarns whether asbestos or non-asbestos were used for making of a gland packing had the basic problem of compression set that is the percentage by which it fails to return to its original size after being subjected to a standard compressive load for a fix period of time. Due to high compression set these packings fail to seal at the minimum of gland load pressure.

The basic functioning of the gland packing is by way of compression i.e. a compressive load is applied on the shaft by way of gland follower load which is transfered to the gland packing perpendicular to the compressive load.

Until very recently pure Poly Tetra Fluoro Ethelyne (herein alter called PTFE) Fibers, Graphite PTFE, Carbon Fibre, Graphite filaments kevlar, Glass Fibres and other Synthetic Fibres has been most widely used material in braided non-asbestos compression packings..

Pure Poly Tetra Fluoro Ethelyne and Graphite Poly Tetra Fluoro Ethelyne packing practically covers 99% of all chemical fluid sealing applications due to inherent characteristics of PTFE and Graphite Poly Tetra Fluoro Ethelyne that resists chemicals, pH 0-14 and temperature upto 260° C.

For high temperature application, kevlar fibre packings are used impregnating with Tetra Fluoro Ethylene dispersion. Since Kevlar by itself is a very harsh, non-lubricating fibre. However, when high tensile strength fibre resisting temperature upto 320° C are required kevlar fibre packing is used. Since kevlar fibre has the characteristic, chemical resistant at pH 3-12 and temperature 320° C.

For still higher temperature, application temperature exceeding 320° C pure Carbon fibre (graphite filament) packings are used. Since graphite has inherent characteristic, chemical resistant, 0-14 pH, temperature 320° C in air and 2760° C in absence of air.

Attempts has been made to incorporate graphite lubricant or non performance-limiting lubricants into a braided glass fibres structure. These attempts have hitherto yielded unsatisfactory results and hence glass fibres braided packing though having a inherent characteristic, chemical resistant, pH 3-12 and temperature upto 800° C due to the harsh nature of glass fibre was found unsuitable for use.

Alternatively when in an application, where a combined properties of two fibres were desired a combination of packing, mixing the two fibres together and then braiding it in a conventional manner or using them separately on different carriers (bobbins) of a conventional braiding machine to provide a desired designed packing is the most commonly used practice.

Though due to the exposure of both the fibres to the same media, temperature and pressure, the unsuitability of each of them to the particular parameter resulted in failure of packing. However, since no other solution existed the combination of packing remained widely in use.

Depending on the size of the gland packing required for a particular pressure service requirement the size of the inner Kevlar fibre and the PTFE yarn is changed and then braided on the braiding machine as per the customers requirement of two track, three track, or four track multi lock braiding and the like.

Thus, depending on the size of the gland packing required for a particular pressure service requirement and the media application the type of the hollow tube, Silicone rubber, Viton rubber, fluoropolymer or PTFE tube is changed with the type of reinforced yarn which is used for covering this tube by conventional winding to impart the necessary outer covering of the final yarn.

The recent discovery of the potentially carcinogenic property of asbestos as well as the fact use and supplies of raw materials are naturally limited as well as not widely distributed, geographically and hence subject to political restrictions has brought in these alternative materials in the fluid sealing industry. PTFE, Graphite PTFE, Carbon Fibre, Kevlar and Glass fibres are among the most widely used in non-asbestos packing today

One of the embodiment of the present invention relates to the reinforced Fluoro Polymer Yarn having the properties of use for chemicals and solvents services pH 0-14 temperature upto 260° C and ahaft speed upto 600 feet per minute. The conventional PTFE packings are made for this services pressure range upto 40kg. per cm.sq.max. for dynamic applications.

The reinforcement of Fluoro Polymer, PTFE and Graphite/PTFE yarn with kevlar fibre, carbon fibre, glass fibre, nylon fibre or any combination of these and hence the recuperation rate and the over all percentage recuperation thereby enhancing the effective sealing and the service life of the gland packing. The porous nature of glass fibre and the nylon fibre is most suitable for better recuperation of the individual yarn used for braiding of gland packing.

Alternatively, where the service parameters demands high strength and chemical resistance a combination of kevlar with carbon fibre or carbon fibre with glass fibre or any such combinations may be used for reinforcing of Fluoro Polymer, PTFE and Graphite/PTFE yarns. An individual reinforced yarn of PTFE or Graphite/PTFE only with Carbon fibre or kevlar fibre or Glass fibre or Nylon fibre may be used in combination with each other for braiding a gland packing.

The conventional PTFE yarn can not be used for higher pressure range, hence, for applications exceeding 40 kg/cm.sq. PTFE yarn needs to be mixed with Kevlar yarn for making a gland packing to be used for this applications. The conventional mode of manufacturing this packing is by using 50% of PTFE yarn and 50% of Kevlar yarn since kevlar has a very high tensile strength (more than that of steel) it is used at the corners and centre (core) while braiding a gland packing.

Though this packing successfully resists high pressures upto 300 kg/cm² . It causes a damage known as scoring over shaft (piston) in use. Kevlar fibre though has a requisite tensile strength ir is non self lubricating fibre i.e. it is a very harsh fibre requiring outside lubrication such as coating or dipping of PTFE or other lubricants since these lubricants do not form an inherent part of the kevlar fibre and are on the surface only they are very quickly removed due to squeezing caused by gland pressure. The remanant harsh kevlar fibre damages the equipment resultant scoring further cuts up the installed gland packing resulting in packing failure and leakage.

To overcome this inherent deficiency associated with the use of kevlar fibre and at the same time making use of its high tensile strength property, the higher tensile strength property, the high tensile kevlar fibre is used for reinforcing PTFE yarn by continues winding of PFTE yarn around kevlar fibre. The harshness of kevlar is totally enveloed and covered by self lubricating PTFE yarn while still providing the high tensile strength to the combination yarn. This yarn is then used for braiding the required size of gland packing.

An improved compression packing comprises of round or square structure consisting of plurality of yarns braided together wherein the said yarns consists of synthetic fibres spun together having thickness from 1 to 10 denier with desired air entrappment and an outer covering yarn may consists of these synthetic fibre reinforcement with PTFE or PTFE Graphite or may be used alone to cover the hollow tube silicon, EP, viton, Nitrile, Neoprene, fluoropolymer, PTFE, Graphite PTFE etc. or a combination thereof depending on the end use.

Another embodiment of the invention is that, synthetic fibres is either carbon or glass fibre or polyamide fibre or a combination thereof depending upon the end use. The fibre and the combination is to be decided based upon the end use.

The other embodiment of the invention is that synthetic fibres is that hollow tube having a reinforcement of a synthetic yarn
outer covering in case of high shaft speed where pure PTFE yarn due to its shaft speed limitations of 600 FPM cannot be used is replaced with Graphite/ PTFE for enveloping the hollow tue.

Fluoro polymer, Pure PTFE and Graphite/ PTFE due to its high chemical resistance is used for conventional gland packings, however chemicals like Benzene, Acetone, Polyvinyl Acetate, Naptha, Petrol, Chlorinated benzene, Chloroform etc. with prolonged contact attacks Fluoro Polymer, PTFE and Graphite/ PTFE making it lose its flexibility and softness and becomes hard.

The hollow tube yarn of silicon, viton, E.P., Nitrile, Fluoropolymer, PTFE, Graphite/PTFE with the outer covering of PTFE of Graphite/PTFE reinforced yarn effectively resists the compression set and recuperates to the original size very successfully imparting an highly effective sealing and long service life making the ultimate low compression packing with virtually no damage due to very low gland follower load.

### BRIEF DESCRIPTION OF THE DRAWINGS

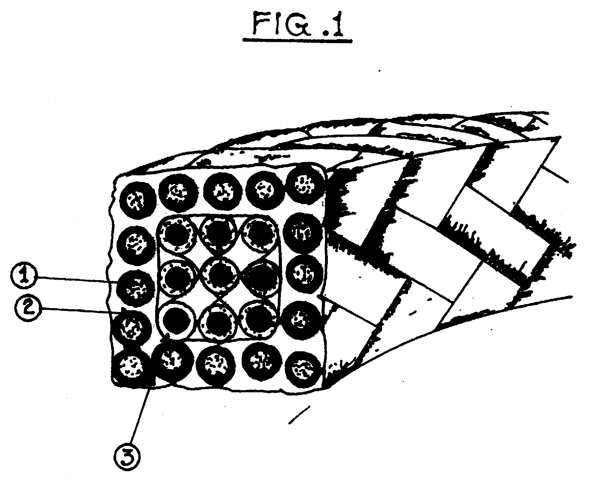

- Fig 1:: depicts the prespective view of the compression packing

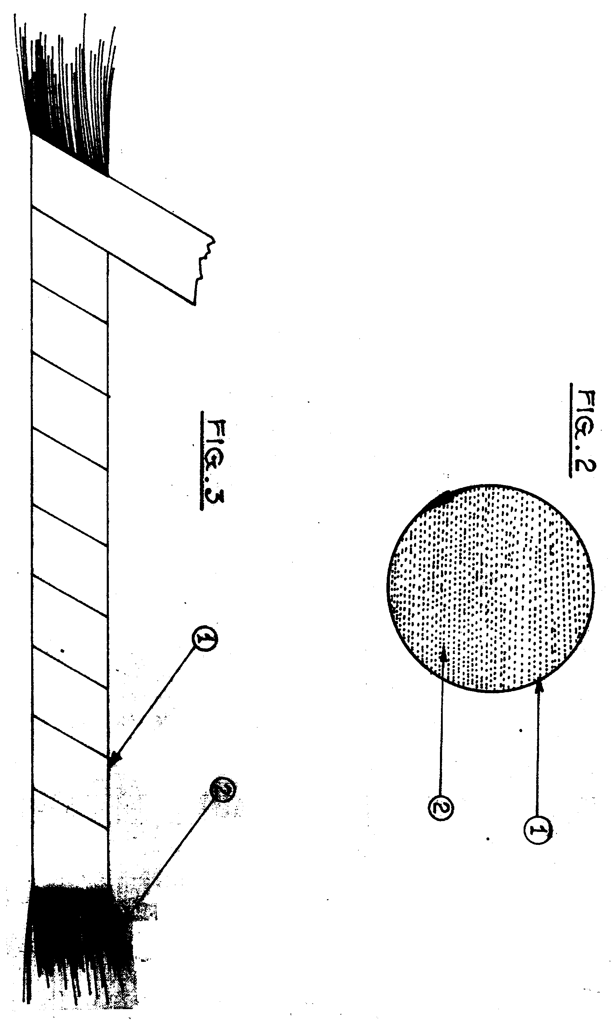

- Fig. 2:: depicts the cross-section of the yarn

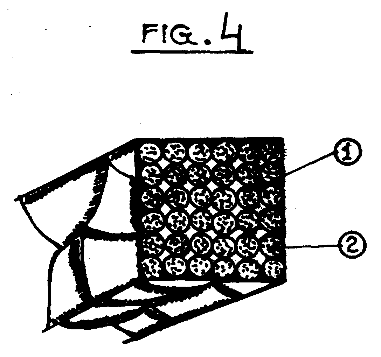

- Fig. 3:: depicts the assembly of the yarn
- Fig. 4:: depicts the prespective view of the gland packing
- Fig. 5 :: depicts the load distribution of the conventional gland packing.
- Fig. 6:: depicts the load destribution of the present packing.

### DETAILED DESCRIPTION OF THE DRAWINGS

The outer envelope of (1) consists of PTFE or PTFE/Graphite is enveloped over the fibre (2). The fibre (2) is a synthetic fibre. The synthetic fibre is called a carbon fibre or glass fibre or nylon fibre or a combination of them depending upon the end use. The synthetic fibres (2) shows is a bundle of synythetic fibres spun together having thickness 1 to 10 denier with desired air entrappment. The section of different fibres of combination, number of fibres depends on the end use. The outer envelop (1), is of PTFE or PTFE/ Graphite yarn again depending on the end use.

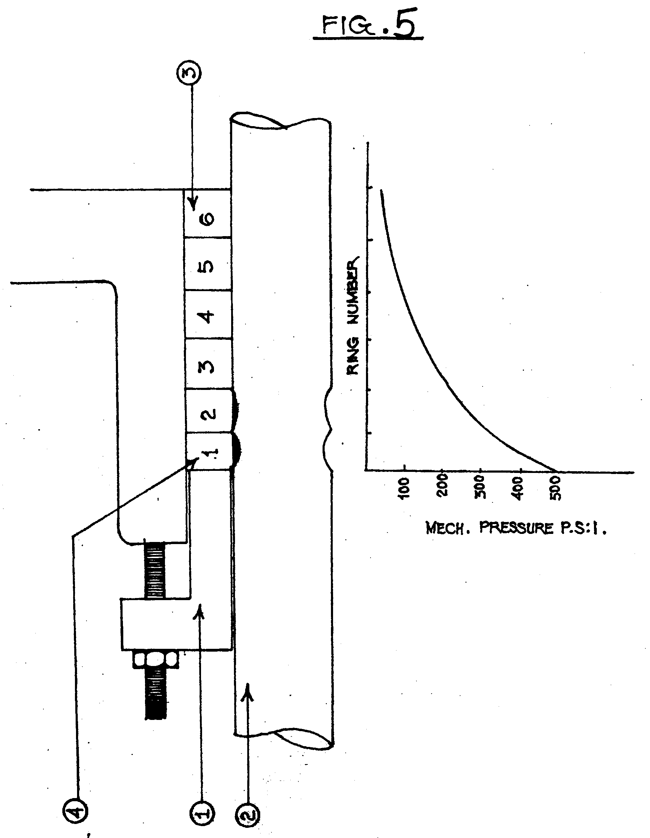

Figure 4 shows the elevation view of the packing comprises a hollow tube (3) made of acrylic or Fluoro Teflon, Urathane, Brominated butyl and like which is covered by PTFE or Graphite PTFE or combination thereof reinforced yarn (2). The said covered yarn tube, are braided together to form a round or square braid. The said braided core is further braided over with plurality of reinforced yarn (1) to obtain the desired cross-section.

Figure 5 shows the stuffing box shalt (2) having conventional packing rings 1 to 6, wherein the first ring is marked as 4, while the last ring is marked as (3). The packing rings can be six, or even less or more, depending upon the size of the equipment stuffing box. When the gland follower 1, is tightened the maximum gland load is taken up by the rings 1 and 2, marked as 4 and minimum or no pressure is on the rest of rings marked (3), thus the initial rings bears the full or maximum gland pressure. This is illustrated by the graph, which clearly depicts the uneven load distribution.

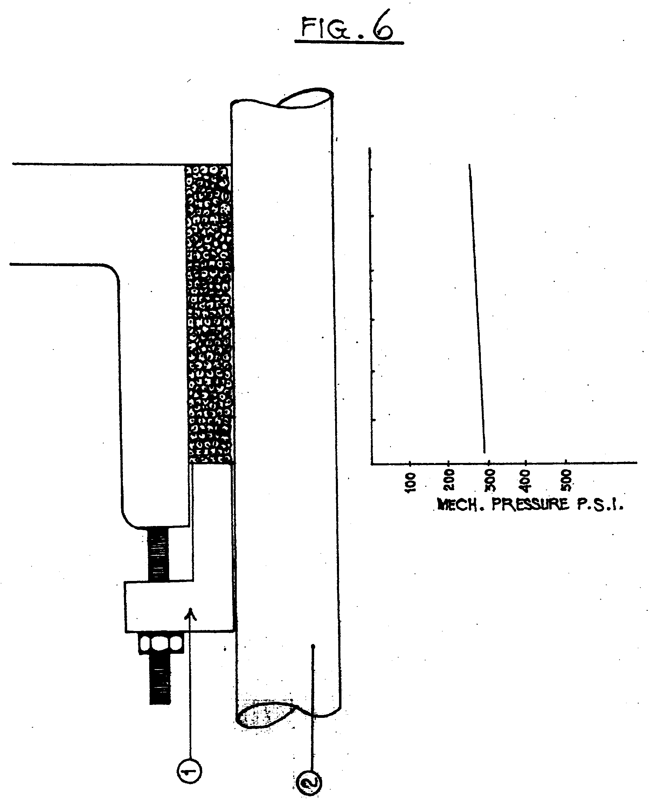

Fig. 6 shows the shalt having stuffing box filled well the low compression novel packing rings. The gland pressure load is not only distributed equally to the rings, as could be seen from the graph but the recuperation (resiliency) is also improved, thus increasing the performance and the life of the packing ring as it works with less gland pressure, the need of the day.

Here, the maximum load being on the last two rings. The rings inside are almost without any pressure thereby unable to seal making the last two rings do the job of entire set. Due to exceptionally high mechanical load from packing gland follower transfered on the last two rings densifying them to affect a seal, a frequent tightening is required which results in worn equipment.

In accordance with the principles of present invention providing an effective sealing under minimum gland pressure exerted by a packing gland follower and transferring the load uniformely till the last sealing ring resulting in an effective sealing due to an excellent recupability of the basic component of the packing hollow yarn.

The air entrapment in the tube makes the packing highly resilient and imparts an excellent recuperation property for better leakage control.

The present invention is advantageous as compared to the conventional one, as the reinforced yarn outer braiding successfully resists the stringent chemical like ortho nitro chlorobenzene, para nitro chlorobenzene, isopropyl alcohol, isopropyl acetate, Benzene, petrol, gasoline, acetone, etc.. and does not allow the yarn to harden and lose its flexibility which otherwise would happen in case of conventional gland packings. The core braid of hollow tube reinforced yarn imparts the greatest recuperation resiliency whereby uniform gland load transfer is achieved making the complete set of stuffing box rings do the sealing with minimum load. The minimum gland load results is less power consumption and better sealing with less or no damage to the equipment.

The minimum load borne by each ring makes all the rings to work together thereby reducing the wear of two or three rings requiring frequent change of stuffing box packings. The resiliency (recuperation) creates a back pressure on the gland load with better sealing as compared to conventional or improved gland packings, as normally the maximum load is on the last two rings, the rings inside are almost without any pressure thereby unable to seal, making the last two rings do the job of entire set. Due to exceptionally high mechanical load from packing gland the load is transferred on to the last two rings densifying them to affect a seal.A frequent tightening is required which results in worn equipment.

In the present invention, under the minimum gland pressure an effective sealing is exerted by a packing gland follower and transferring the load uniformely till the last sealing ring resulting in an effective sealing due to excellent recupability of the basic component of the packing. .

## Claims

1. A low compression high performance packing ring comprising a hollow tube made of rubber or fluoro polymer or a combination thereof, enveloped with polytetra Fluoro Ethylene (PTFE), Graphite Polytetra Fluoro Ethylene (PTFE) or Graphite PTFE reinforced yarn, braided together to obtain the desired round or square core cross section, enveloping the said braided core cross section by further braiding with a plurality of reinforced PTFE or Graphite PTFE yarn resulting in a combination thereof having the desired cross sectional size of the gland packing.

2. A low compression high performance packing ring as claimed in claim 1, wherein the said rubber is Acrylic or Fluoro Teflon, Urethane, Brominated butyl and like.

3. A low compression high performance packing ring as claimed in claim 1, wherein the said outer envelope having a plurality of yarn braided together, the said yarn consists of synthetic fibre's spun together having thickness 1 to 10 denier with desired air entrapment and outer cores of Poly Tetra Ethylene (PTFE) or PTFE Graphite yarn or a combination thereof.

4. A low compression high performance packing ring as claimed in claim 1, wherein the said synthetic fibre is either Carbon Fibre or Glass Fibre or Nylon Fibre or Polyamide Kevlar Fibre or a combination thereof.

5. A low compression high performance packing ring as claimed in claim 1, wherein the ratio of said different fibres is in the combination of said synthetic fibres is 1:1 to 1:10.

6. A low compression high performance packing ring as claimed in claim 1, wherein the wall thickness of the said reinforced hollow tube is 0.025 mm to 2.00 mm.

7. A low compression high performance packing ring as claimed in claim 1, wherein the said outer core of the hollow tube is 0.25 to 10 times the thickness of the said hollow tube.

8. A low compression high performance compression packing as claimed in claim 1 wherein each of said yarn is made of sintered Poly Tetra Fluoro Ethylene (PTFE) or Graphite (PTFE) or Graphite PTFE or a combination thereof..
